# EUROPEAN PATENT SPECIFICATION

(11) **EP 1 247 609 B1**
(45) Date of publication and mention of the grant of the patent: **29.11.2006**
(21) Application number: 02425186.0
(22) Date of filing: 25.03.2002
(51) Int. Cl.: B23K 9/32, B23K 26/32, A61F 9/06

(54) **Portable electric welding machine**
Tragbares elektrisches Schweissgerät
Appareil de soudage électrique portable

(30) Priority: 27.03.2001 IT MI20010641
(43) Date of publication of application: 09.10.2002
(73) Proprietor: Ricerca & Distribuzione S.r.l, 21100 Varese (IT)
(72) Inventor: Dal Soglio, Cristiano, 21100 Varese (IT); Rochira, Giuseppe, 22070 Bregnano (IT)
(74) Representative: Pellegri, Alberto

(56) References cited:
- EP-A- 1 153 692
- US-A- 2 253 403
- US-A- 2 325 506

## Description

### FIELD OF THE INVENTION

The present invention relates to electric welding machines and related accessories.

### BACKGROUND OF THE INVENTION

Welding machines, as other electric and electronic apparatuses must be accurately packed by manufacturers for safely shipping them. The shipping package is often exploited for attracting attention on the trademark of the manufacturer or to boast particular features of the product in view of the fact that it is customarily retained during stockage and sale by retailers.

After the welding machine has been sold, normally the package has little or none value for the customer and is eventually discarded. The costs for packing the apparatus that are not negligeable are practically wasted. Moreover, it is often burdensome for the buyer to dispose of the packaging materials according to ever more stricter rules.

In the specific case of generally portable electric welding machines, several accessories, such as a power cord, a work piece grounding cable, a torch cable, a welding mask, electrodes, safety clothes, such as gloves and/or an apron are indispensable and the tradesman must carry along with him all these accessories, which implies repeatingly making inventories and organizing for the transportation of all these relatively heavy and encumbering objects.

Document US-A-2 253 403 discloses a partitioned housing having a lower ventilated compartment for enclosing a welding power unit and an upper compartment for the accomodation of accessories.

### OBJECT AND SUMMARY OF THE INVENTION

Object of the present invention is an electric welding machine that can be shipped and, after having been sold, carried along with all the necessary welding accessories and materials of use, in a more practical, functionally correct and safe manner than it is done today.

The above mentioned objective is achieved by the present invention that provides for an electric welding machine outstandingly easy to ship whose outer casing, normally having a generally parallelepiped shape, is composed in part of an essential welding accessory.

While greatly improve transportability, a detachable part of the welding machine pack is realized in a form suited to function as a welding mask, thus creating a storage space for other welding accessories and materials of use.

The invention is clearly defined in the appended claims.

The structural and functional features of the welding machine of present invention and the advantages thereof in respect to the machines of the prior art will become evident through the following description, referred to the attached drawings, that show an electric welding machine made according to this invention, wherein:
**Figure 1** is a perspective view from atop of a welding machine pack according to the present invention, the lower portion of which is the welding machine proper and the cap-shaped upper portion of which is a welding mask;

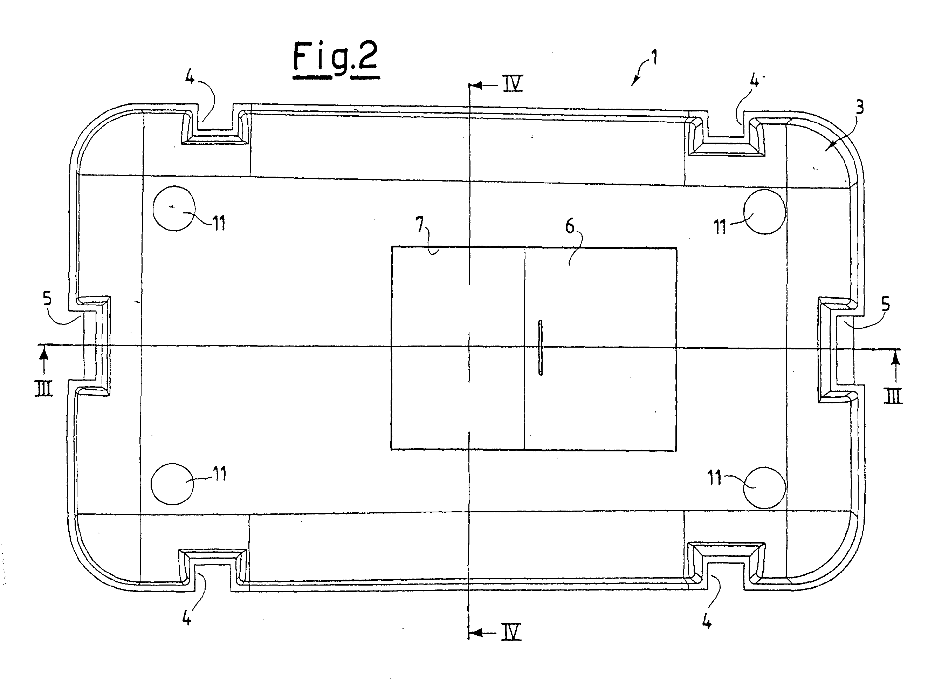

**Figure 2** is a plan view of the welding machine of Figure 1;

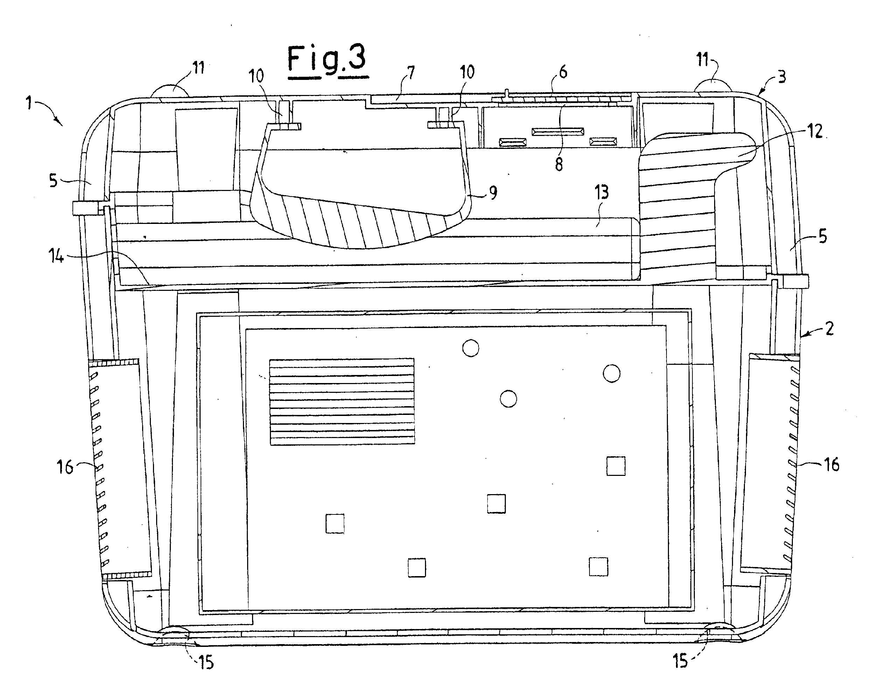

**Figure 3** is a sectional view of the welding machine of Figure 2 along the section line III-III;

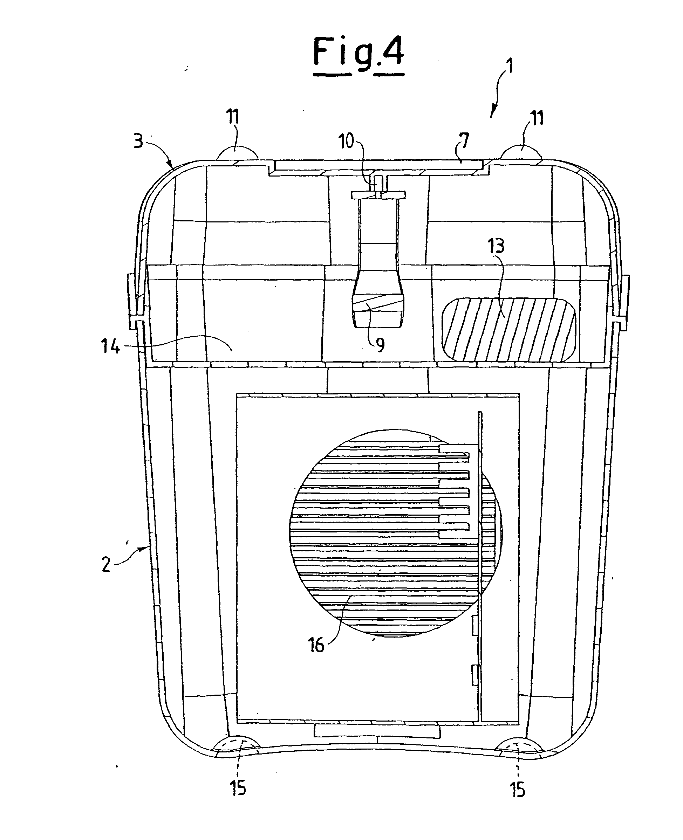

**Figure 4** is a sectional view of the welding machine of Figure 2 along the section line IV-IV;

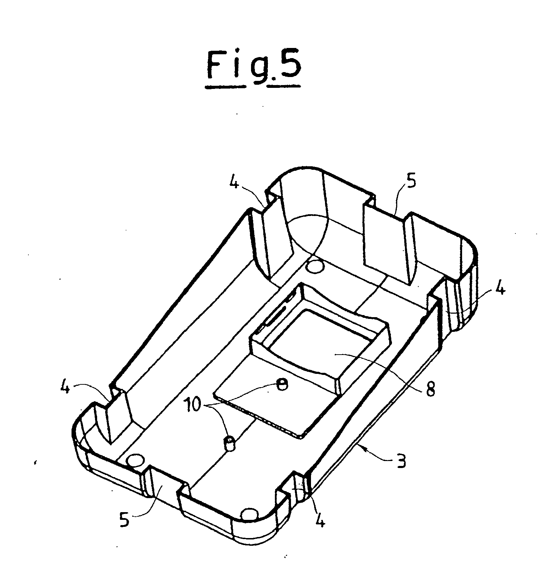

**Figure 5** is a perspective view of the cap portion, in an upside-down position.

### DESCRIPTION OF A PREFERRED EMBODIMENT OF THE INVENTION

With reference to the drawings, the electric welding machine pack of this invention is indicated as a whole with 1, and in the depicted example, according to the present invention, it comprises an electric welding machine body whose outer casing is indicated with 2 and a cap portion 3 having a tapered longitudinal section profile.

The material of the casing 2, commonly of a suitable molded plastic material is resistant to impacts and to atmospheric events, and isolates from shocks the inner electrical circuits of the machine, being mechanical shocks the primary cause of failures of those relatively delicate functional parts of electric welding machines.

A series of clasps engage in respective seats 4 for fastening the cap 3 that may be made of the same molded plastic material of the casing onto the top face of the casing 2.

In each of the two lateral faces of the cap 3 (and eventually even in the lateral faces of the casing 2) there is a depression or groove 5 for accommodating the thickness of a transportation strap.

The casing 2 is normally provided with aeration grids 16 for favoring the cooling of the electric circuits of the welding machine.

On the top surface of the cap 3 there is a panel 6 that may slide in a recess 7 for uncovering a nonactinic glass 8 viewing window.

Fixed on blocks on the inner surface of the cap 3 there is a handle 9, practically transforming the cap 3, once unfastened and separated from the casing 2, in a perfectly functional welding mask.

Therefore, the welding mask, a most cumbersome, though indispensable welding accessory, is integrated in a practically transportable welding machine pack.

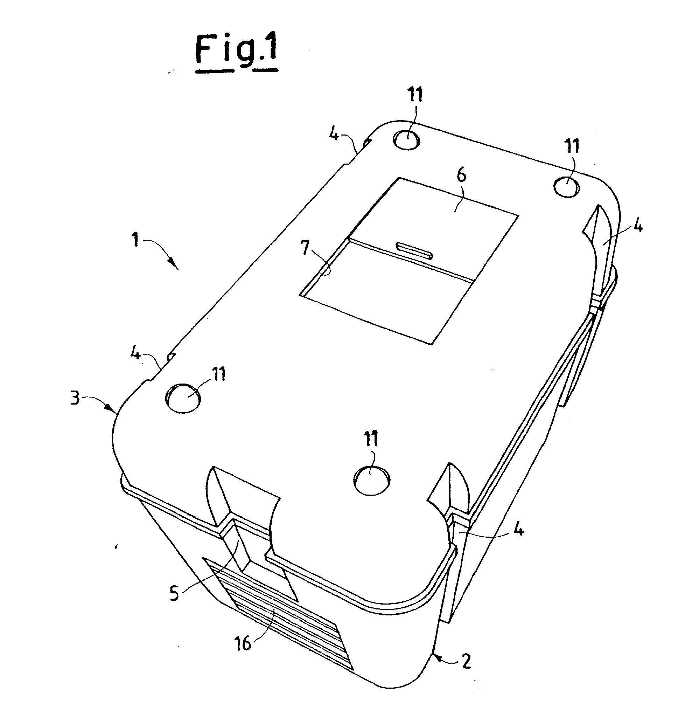

As it may be noticed in Figure 1, the cap 3 has projections 11 such that when using it as a welding mask it may be freely dropped on any flat surface though preventing direct contact with the nonactinic glass 8.

In the outer surface of the bottom face of the casing 2 of the electric welding machine there are recesses 15 that alignedly match with the projections 11 of the cap 3. This permits to safely stack two or more welding machine packs of the invention, greatly facilitating storage.

The upper face of the casing 2 has a functional layout. Beside the cockpit 12, fitted with the usual knobs and switches for turning on and adjusting the welding parameters, there is a recess 13 in which a supply of welding electrodes may be placed for transporting them in a completely protected manner.

Moreover, the space 14 that is defined between the upper face of the casing 2 of the welding machine and the inner face of the welding mask-cap 3 may be exploited for orderly carrying other basic welding machine accessories, such as the torch and its cable, a grounding cable, a power cord, gloves, apron and the like.

The features and advantages of the electric welding machine pack of the present invention, are evident from the above description.

In particular, the following may be remarked:
- practicality for the user, because the constructive particularities of the pack ensure immediate access to all the materials and accessories necessary for welding; moreover, the risk of loosing or forgetting accessories is minimized and there are no additional costs of one or more specific containers for transporting the welding equipment materials of use and accessories to and from the working place;
- enhanced safety for the welder, because there is little risk of forgetting to carry along safety accessories such as the welding mask and the gloves;
- environment friendliness, because of the limited amount of discardable packaging that may be used for shipping;
- lower costs of fabrication, storage and shipping for the manufacturer, because of the reduced number of specific packagings required;
- enhanced shock protection of the shipped equipment compared to ordinary cardbox packagings;
- reduction of warranty repair costs and of transportation costs because of lesser risks of damages during transportation;
- greater profit margin for the manufacturer, because the peculiarly useful and substantially unique packing-container may command a higher profit margin and/or because of an associate sale of basic accessories.

Of course many modifications may be made to the electric welding machine pack of the present invention, though remaining within the domain of the inventive concept. In practicing the invention, materials of construction, shapes and dimensions of the depicted example may be adapted to need and be substituted with technically equivalent ones.

For example, the detachable welding mask-cap 3, constituting the space 14, may alternatively fit on a side face of the parallelepiped welding machine body 2 instead than on its upper face.

## Claims

1. A portable electric welding machine having a substantially parallelepiped casing (2) control knobs and switches installed on a face of the casing,
and a welding mask (3), **characterized in that** said mask is detachably clampable on said face of the casing to constitute a cap portion (3) of a portable electric welding machine pack;
said welding mask (3) with function of a cap, having a welding glass window (8) provided with a slidable blind (6) to protect the glass window from impacts during transportation;
the space (14) defined between said face of the casing (2) and the welding mask-cap portion (3) comprising recesses (13) for storing materials of use and housing welding accessories during transportation.

2. The electric welding machine of claim 1, wherein said welding mask-cap has projections (11) on its outer surface providing at least three points of rest when laying the welding mask on a flat surface.

3. The electric welding machine of claim 1, wherein said materials of use and welding accessories include electrodes, torch cable, power cable, grounding cable, gloves and apron.

4. The electric welding machine of claim 1, wherein opposite parallel sides of said welding mask-cap have depressions (5) or guides for a transportation strap, the ends of which are fastened to said casing.

## Patentansprüche

1. Tragbare Elektroschweißmaschine mit einem im Wesentlichen parallelepipedförmigen Gehäuse (2), wobei auf einer Fläche des Gehäuses Steuerlmöpfe und Schalter installiert sind, und mit einer Schweißmaske, **dadurch gekennzeichnet, dass** die Maske an die Oberfläche des Gehäuses lösbar geklemmt werden kann, um einen Deckelabschnitt (3) einer tragbaren Elektroschweißmaschinen-Verpackung zu bilden;
wobei die Schweißmaske (3), die die Funktion eines Deckels hat, ein Schweißglas-Fenster (8) besitzt, das mit einem verschiebbaren Schirm (6) versehen ist, um das Glasfenster während des Transports vor Stößen zu schützen;
wobei der Raum (14), der zwischen der Fläche des Gehäuses (2) und dem Schweißmasken-Deekelabschnitt (3) definiert ist, Aussparungen (13) aufweist, um während des Transports Gebrauchsmaterialien zu lagern und Schweißzubehör unterzubringen.

2. Elektroschweißmaschine nach Anspruch 1, bei der der Schweißmasken-Deckel auf seiner äußeren Oberfläche Vorsprünge (11) besitzt, die wenigstens drei Auflagepunkte bilden, wenn die Schweißmaske auf einer ebenen Oberfläche liegt.

3. Elektroschweißmaschine nach Anspruch 1, bei der die Gebrauchsmaterialien und das Schweißzubehör Elektroden, Schweißbrennerkabel, Stromversorgungskabel, Erdungskabel, Handschuhe und Schürzen umfassen.

4. Elektroschweißmaschine nach Anspruch 1, bei der gegenüberliegende parallele Seiten des Schweißmasken-Deckels Vertiefungen (5) oder Führungen für ein Transportband besitzen, dessen Enden am Gehäuse befestigt sind.

## Revendications

1. Poste de soudure électrique portable comprenant un boîtier sensiblement parallélépipédique (2), des boutons et des commutateurs de commande installés sur une face du boîtier, et un masque de soudure (3), **caractérisé en ce que** :
le masque est fixable de façon amovible sur la face du boîtier pour constituer une partie de couvercle (3) d'une malette de poste de soudure électrique portable ;
le masque de soudure (3) ayant la fonction d'un couvercle, comprend une fenêtre de verre de soudure (8) muni d'un volet coulissant (6) pour protéger la fenêtre d'impacts pendant le transport ;
l'espace (14) définit entre la face du boîtier (2) et la partie de couvercle-masque de soudure (3) comprend des évidements (13) pour stocker des matériaux consommables et contenir des accessoires de soudure pendant le transport.

2. Poste de soudure électrique selon la revendication 1, dans lequel le couvercle-masque de soudure comporte des saillies (11) sur sa face externe fournissant au moins trois points d'appui quand le masque repose sur une surface plane.

3. Poste de soudure électrique selon la revendication 1, dans lequel les matériaux consommables et les accessoires de soudure comprennent des électrodes, un câble de torche, un câble d'alimentation, un câble de mise à la masse, des gants et un tablier.

4. Poste de soudure électrique selon la revendication 1, dans lequel des côtés parallèles du couvercle-masque de soudure comporte des dépressions (5) ou guides pour une bande de transport dont les extrémités sont liées au boîtier.
